(19) Europäisches Patentamt

European Patent Office

Office européen des brevets

(11) **EP 1 473 324 A1**

(12) **EUROPEAN PATENT APPLICATION**
published in accordance with Art. 158(3) EPC

(43) Date of publication:
**03.11.2004 Bulletin 2004/45**

(21) Application number: **03703115.0**

(22) Date of filing: **31.01.2003**

(51) Int Cl.7: **C08L 67/00**, C08J 5/00,
C08L 77/00, C08L 101/16

(86) International application number:
**PCT/JP2003/000973**

(87) International publication number:
**WO 2003/066733 (14.08.2003 Gazette 2003/33)**

(84) Designated Contracting States:
**AT BE BG CH CY CZ DE DK EE ES FI FR GB GR
HU IE IT LI LU MC NL PT SE SI SK TR**

(30) Priority: **05.02.2002 JP 2002028546
18.04.2002 JP 2002116585**

(71) Applicant: **Mitsui Chemicals, Inc.
Tokyo 105-7117 (JP)**

(72) Inventors:
• **SHINODA, Hosei c/o Mitsui Chemicals, Inc.
Sodegaura-shi, Chiba 299-0265 (JP)**

• **KASHIMA, Takeshi c/o Mitsui Chemicals, Inc.
Sodegaura-shi, Chiba 299-0265 (JP)**
• **KUROKI, Takayuki c/o Mitsui Chemicals, Inc.
Ichihara-shi, Chiba 299-0108 (JP)**
• **TAKEHARA, Akinori c/o Mitsui Chemicals, Inc.
Ichihara-shi, Chiba 299-0108 (JP)**
• **OBUCHI, Shoji c/o Mitsui Chemicals, Inc.
Ichihara-shi, Chiba 299-0108 (JP)**

(74) Representative: **Cresswell, Thomas Anthony
J.A. KEMP & CO.
14 South Square
Gray's Inn
London WC1R 5JJ (GB)**

(54) **BIODEGRADABLE RESIN COMPOSITION AND MOLDED OBJECT THEREOF**

(57)     The invention relates to a resin composition (AA) comprising an aliphatic polyester or aliphatic polyamide (component (A)), a plastic having a melting point or glass transition temperature (Tg) of -10°C or more (component (B)) and a radical generating agent (C),

wherein the compounding ratio of the component (A), the component (B) and the radical generating agent (C), based on the total weight thereof, is:

1 to 98.995% by weight of the component (A),
98.995 to 1% by weight of the component (B), and
0.005 to 5% by weight of the radical generating agent (C), and

an aliphatic unsaturated polybasic acid (a) is contained in the polymer constituent of the component (A) and/or the component (B). The invention provides a resin com-
position suitable as a starting material of biodegradable material maintaining transparency, free of bleeding of a plasticizer and endowed with flexibility. The molded article of the invention is a molded article excellent in flexibility, mechanical strength, safety and decomposition and free of bleeding of a plasticizing component and can thus be preferably used as a material widely in various packaging films for food, electronics, medicine, chemicals, cosmetics etc. and in various materials used in agriculture, civil engineering, buildings, marine products industry, and compost materials. Even if the molded article is disposed of after use, it is not accumulated as industrial waste or domestic waste.

EP 1 473 324 A1

# EP 1 473 324 A1

**Description**

Technical Field

The present invention relates to a resin composition with improvements in physical properties such as flexibility and transparency and in particular to a biodegradable resin composition.

Background Art

Biodegradable plastics are plastics, which can, similar tousual plastics, beused as thermo plastic resinand are decomposed into water and carbon dioxide after use by the action of microorganisms etc. As consciousness of environmental problems is increased in recent years, many biodegradable plastics have been developed. For example, a resin composition based on polylactic acid or a lactic acid/other hydroxycarboxylic acid copolymer is disclosed as biodegradable plastics in JP-A6-340753.

Many biodegradable plastics including polylactic acid exhibit high strength, modulus of elasticity, and rigidity, but suffer from a disadvantage of lack of flexibility. Accordingly, the biodegradable plastics were not suitable for uses requiring flexibility where polyethylene, polypropylene, soft polyvinyl chloride, etc. are widely used.

Generally, a method of adding a plasticizer is known as a method of rendering resin flexible. For example, JP-A 4-335060 discloses a composition having a plasticizer added to polylactic acid. Examples of the plasticizer include diisobutyl adipate, dioctyl sebacate etc. However, the plasticizing effect of these plasticizers is low and cannot achieve sufficient flexibility. When these plasticizers are used, the plasticizers are bled just after molding or with time to change flexibility and transparency. When the biodegradable plastics are polylactic acid of particularly high rigidity, a method of rendering the plastics flexible by blending other relatively flexible biodegradable plastics is also disclosed. For example, JP-A 8-245866 and JP-A 9-111107 disclose a method of blending polybutylene succinate, polyethylene succinate, polylactone etc. as relatively flexible biodegradable plastics with polylactic acids. JP-A 2001-26658 discloses a composition having a plasticizer and a radical generating agent added to polylactic acid. However, a large amount of the biodegradable plastics should be added to confer sufficient flexibility on polylactic acid, resulting in deterioration of heat resistance and transparency as features of polylactic acid.

Disclosure of Invention

The object of the present invention is to provide a resin composition usable preferably as a biodegradable material having excellent flexibility, heat resistance and transparency and hardly changing physical properties with time without bleeding low-molecular compounds such as a plasticizer.

In view of the prior art described above, the present inventors made extensive study, and as a result they found that biodegradable plastics can be rendered flexible effectively by mixing them with an aliphatic polyester having a glass transition temperature of 25°C or less and containing a radial generating agent and its decomposed product, preferably an aliphatic unsaturated polybasic acid as a polymer constituent, and further reacting an unsaturated bond of the aliphatic polyester, and the present invention was thereby arrived at.

That is, the present relates to a resin composition (AA) comprising an aliphatic polyester or aliphatic polyamide (component (A)), a plastic having a melting point or glass transition temperature (Tg) of -10°C or more (component (B)) and a radical generating agent (C),

wherein the compounding ratio of the aliphatic polyester or aliphatic polyamide (component (A)), the plastic having a melting point or glass transition temperature (Tg) of -10°C or more (component (B)) and the radical generating agent (C), based on the total weight thereof, is:

1 to 98.995% by weight of the aliphatic polyester or aliphatic polyamide (component (A)),
98.995 to 1% by weight of the plastic having a melting point or glass transition temperature (Tg) of -10°C or more (component (B)), and
0.005 to 5% by weight of the radical generating agent (C), and

when the component (A) is an aliphatic polyester, the compounding ratio of repeating units in the molecule, based on the number of total repeating units in the molecule (assuming that the number of total repeating units in the molecule is 100 mol%), is:

0 to 50 mol% repeating unit (a) having an aliphatic unsaturated bond,
0 to 51 mol% polyvalent alcohol unit (b),
0 to 51 mol% saturated polybasic acid unit (c), and

0 to 80 mol% aliphatic hydroxycarboxylic acid or lactone compound unit (d).

Further, the present invention relates to:

a resin modifier comprising the resin composition (AA),
a resin composition (BB) comprising 1 to 50% by weight of the resin composition (AA) and 50 to 99% by weight of a biodegradable resin (D), and
a molded article of the resin composition (AA) or (BB).

Best Mode for Carrying Out the Invention

Hereinafter, the present invention is described in detail. The present invention relates to a resin composition (AA) comprising an aliphatic polyester or aliphatic polyamide (component (A)), a plastic having a melting point or glass transition temperature (Tg) of -10°C or more (component (B)) and a radical generating agent (C), wherein the compounding ratio of the component (A), the component (B) and the radical generating agent (C), based on the total weight thereof, is:

1 to 98.995% by weight of the component (A),
98.995 to 1% by weight of the component (B), and
0. 005 to 5% by weight of the radical generating agent (C), and

an aliphatic unsaturated polybasic acid (a) is contained in the polymer constituent of the component (A) and/or the component (B); a resin composition (BB) obtained therefrom; and a molded article obtained therefrom. Hereinafter, the respective components (A), (B), (C) and (D), the resin compositions (AA) and (BB), and the molded article are described.

[Aliphatic polyester or aliphatic polyamide (component (A))]

The component (A) comprises an aliphatic polyester or an aliphatic polyamide and may be a mixture of the aliphatic polyester and aliphatic polyamide. The glass transition temperature (Tg) of the component (A) is 25 to -90°C, preferably 0 to -80°C, more preferably -30 to -80°C. When the component (A) has a melting point (Tm), the Tm is preferably 25°C or less.
When the component (A) is an aliphatic polyester, the compounding ratio of total repeating units in the aliphatic polyester (component (A)) molecule, based on the number of total repeating units in the molecule, is:

0 to 50 mol% aliphatic unsaturated polybasic acid (a),
0 to 51 mol% aliphatic polyvalent alcohol (b),
0 to 51 mol% aliphatic saturated polybasic acid (c), and
0 to 80 mol% aliphatic hydroxycarboxylic acid (d). The compounding ratio is preferably as described in (a) to (d) below.

The aliphatic polyester having an aliphatic unsaturated bond is the one having 0 to 50 mol% repeating unit having an aliphatic unsaturated bond, based on total repeating units in the molecule, and having a glass transition temperature (Tg) of 25 to -90°C, preferably 0 to -80°C, more preferably -30 to -80°C, and having a weight-average molecular weight (Mw) of 1000 to 300, 000. When the content of the aliphatic unsaturated bond is too low, crosslinking reaction does not sufficiently occur, thus failing to exhibit a sufficient effect on modification of biodegradable plastics. On the other hand, when the content of the aliphatic unsaturated bond is too high, excessive crosslinkage occurs to deteriorate physical properties of biodegradable plastics significantly.
The aliphatic polyester having an aliphatic unsaturated bond is desirably an amorphous one whose melting point cannot be measured at a temperature substantially higher than room temperature. When the crystallinity of the aliphatic polyester is high, the compatibility thereof with biodegradable plastics is lowered and no sufficient plasticizing effect maybe obtained. The presence or absence of crystallinity can be confirmed by measurement means such as X-ray diffraction or a differential scanning calorimeter.
A too low molecular weight of the aliphatic polyester having an aliphatic unsaturated bond is not preferable because physical properties of the resin composition are changed with time after molding, or bleeding of the aliphatic polyester occurs easily. On the other hand, a too high molecular weight is not preferable either because melt viscosity is increased so that the aliphatic polyester is hardly mixed with biodegradable plastics. Generally, the weight-average molecular weight of the aliphatic polyester having an aliphatic unsaturated bond is preferably 1,000 to 300,000, more preferably 2,000 to 100,000, as determined by GPC (for example in a chloroform solvent system).

[Method of producing the aliphatic polyester (aliphatic polyester, component (A))]

The method of producing the aliphatic polyester, preferably the aliphatic polyester having an aliphatic unsaturated bond (component (A)) is not particularly limited. The method is described for example in JP-A 10-1536 and JP-A 11-60662. For example, the aliphatic polyester can be produced by reaction of lactones, lactide, glycollide and hydroxycarboxylic acids, by reaction of polyvalent alcohols with polybasic acids, etc., preferably by reaction of polyvalent alcohols with polybasic acids. An aliphatic unsaturated bond can be contained in the aliphatic polyester by the coexistence of lactones, hydroxycarboxylic acids, polyvalent alcohols or polybasic acids having an aliphatic unsaturated bond, as at least one component of the lactones, hydroxycarboxylic acids, polyvalent alcohols, and polybasic acids used in the reaction. Among these, polybasic acids having an aliphatic unsaturated bond are particularly preferable.

The aliphatic polyester (aliphatic polyester, component (A)) having the aliphatic hydroxy carboxylic acid (d) can be produced preferably by using an aliphatic unsaturated polybasic acid as the repeating unit (a) having an aliphatic unsaturated bond, to obtain a copolymer (ab) of the aliphatic unsaturated polybasic acid and the aliphatic hydroxycarboxylic acid (d), and then copolymerizing the copolymer (ab) with the polyvalent alcohol unit (b) and the saturated polybasic acid unit (c).

[Repeating unit (a) having an aliphatic unsaturated bond constituting the aliphatic polyester (aliphatic polyester, component (A))]

The compound having an aliphatic unsaturated bond is preferably an aliphatic unsaturated polybasic acid. Examples of the aliphatic unsaturated polybasic acid used in the present invention include fumaric acid, maleic acid, maleic anhydride, itaconic acid, itaconican hydride, citraconic acid and citraconic anhydride.

The amount of the aliphatic unsaturated polybasic acid in the aliphatic polyester (component (A) ) molecule in the present invention is 0 to 50 mol%, preferably 0.1 to 20 mol%, more preferably 0.5 to 10 mol%. In the present invention, the aliphatic polyester having an aliphatic unsaturated bond may contain a small amount of urethane bond. The content of the urethane bond is less than about 10 mol% based on total repeating units in the molecule. In the present invention, the aliphatic polyester having an aliphatic unsaturated bond may be obtained by extending the aliphatic polyester obtained by the method described above, by a binding agent such as diisocyanate compound.

[Polyvalent alcohol unit (b) constituting the aliphatic polyester (aliphatic polyester, component (A))]

Generally, the aliphatic polyvalent alcohol used in the present invention is preferably an aliphatic divalent alcohol. Examples of the polyvalent alcohol used in the present invention include, for example, ethylene glycol, diethylene glycol, triethylene glycol, polyethylene glycol, propylene glycol, dipropylene glycol,ethylene glycol/propylene glycol copolymer, 1,3-butane diol, 1,4-butane diol, 3-methyl-1,5-pentane diol, 1,6-hexane diol, 1,9-nonane diol, neopentyl glycol, polytetramethylene glycol etc. Further, a small amount of a multifunctional (trivalent or more) alcohol such as glycerin, trimethylol propane etc. may also be contained. Among these compounds, the polyethylene glycol represented by the chemical formula (1) and/or the polytetramethylene glycol represented by the chemical formula (2) are preferable.

$$HO\text{-}(\text{-}CH_2CH_2O\text{-})_n\text{-}H$$

$$(2 \leq n \leq 10) \tag{1}$$

$$HO\text{-}(\text{-}CH_2CH_2CH_2CH_2O\text{-})_n\text{-}H$$

$$(1 \leq n \leq 10) \tag{2}$$

In the present invention, the amount of the polyvalent alcohol in the aliphatic polyester (component (A)) molecule is 0 to 51 mol%, preferably 10 to 51 mol%, more preferably 20 to 51 mol%.

[Saturated polybasic acid unit (c) constituting the aliphatic polyester (aliphatic polyester, component (A))]

Generally, the aliphatic saturated polybasic acid used in the present invention is preferably an aliphatic dibasic acid. Examples of the aliphatic saturated polybasic acid include, for example, oxalic acid, malonic acid, succinic acid, glutaric acid, adipic acid, pimelic acid, suberic acid, azelaic acid, sebacic acid, and esters and anhydrides thereof. Further, a small amount of a trifunctional or more polybasic acid such as butane tetracarboxylic acid may also be contained. The amount of the saturated polybasic acid in the aliphatic polyester (component (A) ) molecule in the present invention is 0 to 51 mol%, preferably 10 to 51 mol%, more preferably 20 to 51 mol%.

[A liphatic hydroxy carboxylic acid (d) constituting the aliphatic polyester (aliphatic polyester, component (A))]

The aliphatic hydroxycarboxylic acid used in the present invention is not particularly limited insofar as it is a hydroxy-containing carboxylic acid and/or lactone compound. Specific examples include aliphatic hydroxycarboxylic acids such as glycolic acid (2-hydroxyethanoic acid), lactic acid (2-hydroxypropanoic acid), tartaric acid, citric acid, malic acid, 2-hydroxybutanoic acid, 2-hydroxypentanoic acid, 2-hydroxyhexanoic acid, 2-hydroxyheptanoic acid, 2-hydroxyoctanoic acid, 2-hydroxy-2-methylpropanoic acid, 2-hydrdoxy-2-methylbutanoic acid, 2-hydroxy-2-ethylbutanoic acid, 2-hydroxy-2-methylpentanoic acid, 2-hydroxy-2-ethylpentanoic acid, 2-hydroxy-2-propylpentanoic acid, 2-hydroxy-2-butylpentanoic acid, 2-hydroxy-2-methylhexanoic acid, 2-hydroxy-2-ethylhexanoic acid, 2-hydroxy-2-propylhexanoic acid, 2-hydroxy-2-butylhexanoic acid, 2-hydroxy-2-pentylhexanoic acid, 2-hydroxy-2-methylheptanoic acid, 2-hydroxy-2-ethylheptanoic acid, 2-hydroxy-2-propylheptanoic acid, 2-hydroxy-2-butylheptanoic acid, 2-hydroxy-2-pentylheptanoic acid, 2-hydroxy-2-hexylheptanoic acid, 2-hydroxy-2-methyloctanoic acid, 2-hydroxy-2-ethyloctanoic acid, 2-hydroxy-2-propyloctanoic acid, 2-hydroxy-2-butyloctanoic acid, 2-hydroxy-2-pentyloctanoic acid, 2-hydroxy-2-hexyloctanoic acid, 2-hydroxy-2-heptyloctanoic acid, 3-hydroxypropanoic acid, 3-hydroxybutanoic acid, 3-hydroxypentanoic acid, 3-hydroxyhexanoic acid, 3-hydroxyheptanoic acid, 3-hydroxyoctanoic acid, 3-hydroxy-3-methylbutanoic acid, 3-hydroxy-3-methylpentanoic acid, 3-hydroxy-3-ethylpentanoic acid, 3-hydroxy-3-methylhexanoic acid, 3-hydroxy-3-ethylhexanoic acid, 3-hydroxy-3-propylhexanoic acid, 3-hydroxy-3-methylheptanoic acid, 3-hydroxy-3-ethylheptanoic acid, 3-hydroxy-3-propylheptanoic acid, 3-hydroxy-3-butylheptanoic acid, 3-hydroxy-3-methyloctanoic acid, 3-hydroxy-3-ethyloctanoic acid, 3-hydroxy-3-propyloctanoic acid, 3-hydroxy-3-butyloctanoic acid, 3-hydroxy-3-pentyloctanoic acid, 4-hydroxybutanoic acid, 4-hydroxypentanoic acid, 4-hydroxyhexanoic acid, 4-hydroxyheptanoic acid, 4-hydroxyoctanoic acid, 4-hydroxy-4-methylpentanoic acid, 4-hydroxy-4-methylhexanoic acid, 4-hydroxy-4-ethylhexanoic acid, 4-hydroxy-4-methylheptanoic acid, 4-hydroxy-4-ethylheptanoic acid, 4-hydroxy-4-propylheptanoic acid, 4-hydroxy-4-methyloctanoic acid, 4-hydroxy-4-ethyloctanoic acid, 4-hydroxy-4-propyloctanoic acid, 4-hydroxy-4-butyloctanoic acid, 5-hydroxypentanoic acid, 5-hydroxyhexanoic acid, 5-hydroxyheptanoic acid, 5-hydroxyoctanoic acid, 5-hydroxy-5-methylhexanoic acid, 5-hydroxy-5-methylheptanoic acid, 5-hydroxy-5-ethylheptanoic acid, 5-hydroxy-5-methyloctanoic acid, 5-hydroxy-5-ethyloctanoic acid, 5-hydroxy-5-propyloctanoic acid, 6-hydroxyhexanoic acid, 6-hydroxyheptanoic acid, 6-hydroxyoctanoic acid, 6-hydroxy-6-methylheptanoic acid, 6-hydroxy-6-methyloctanoic acid, 6-hydroxy-6-ethyloctanoic acid, 7-hydroxyheptanoic acid, 7-hydroxyoctanoic acid, 7-hydroxy-7-methyloctanoic acid and 8-hydroxyoctanoic acid, as well as esters, oligomers and cyclic lactones derived therefrom.

Specific examples of the cyclic lactones include cyclic ester intermediates of hydroxycarboxylic acids, for example lactide as a cyclic lactic acid dimer, glycollide as a cyclic glycolic acid dimer, and ε-caprolactone as cyclic 6-hydroxy caprolate, as well as β-propiolactone, γ-butyrolactone, δ-valerolactone etc. Preferable examples include lactic acid, glycolic acid, 3-hydroxybutyric acid, 4-hydroxybutyric acid, 4-hydroxyvaleric acid, 5-hydroxyvaleric acid and 6-hydroxycapronic acid, among which lactic acid is preferable for the transparency of the resulting polyhydroxy carboxylic acid. Two or more of these hydroxycarboxylic acids may be simultaneously used.

In a hydroxycarboxylic acid having asymmetric carbon in the molecule, such as lactic acid, a mixture of equal amounts of D- and L-hydroxycarboxylic acids (racemate) occurs, and either D- or L-hydroxycarboxylic acid can be used. L-lactic acid is particularly preferable.

The amount of the aliphatic hydroxycarboxylic acid in the aliphatic polyester (component (A)) molecule in the invention is 0 to 80 mol%, preferably 10 to 70 mol%, more preferably 30 to 60 mol%.

[Aliphatic polyamide (component (A))]

The aliphatic polyamide (component(A)) includes polyamides such as polycapramide (nylon-6), poly-ω-aminoheptanoic acid (nylon-7), poly-ω-aminononanoic acid (nylon-9), polylauryllactam (nylon-12), polyethylene diamine adipamide (nylon-2, 6), polytetramethylene adipamide (nylon-4, 6), polyhexamethylene adipamide (nylon-6, 6), polyhexamethylene sebacamide (nylon-6, 10), polyhexamethylene dodecamide (nylon-6, 12), polyoctamethylene adipamide (nylon-8, 6), polydecamethylene adipamide (nylon-10, 8), or caprolactam/lauryllactam copolymer (nylon-6/12), caprolactam/ω-aminononanoic acid copolymer (nylon 6/9), caprolactam/hexamethylene diammonium adipate copolymer (nylon-6/6,6), lauryllactam/hexamethylene diammonium adipate copolymer (nylon-12/6, 6), hexamethylene diammonium adipate copolymer (nylon-2, 6/6, 6), caprolactam/hexamethylene diammonium adipate/hexamethylene diammonium sebacate copolymer (nylon-6, 6/6, 10), ethylene diammonium adipate/hexamethylene diammonium adipate/hexamethylene diammonium sebacate copolymer (nylon-6/6, 6/6, 10), polymethaxylene adipamide (MXD6), hexamethylene terephthalamide/hexamethylene isophthalamide copolymer (nylon 6I-6T) etc.

The polyamide includes polyamino acids and derivatives thereof, for example polymers based on amino acids, such as polysuccinic imide, polyaspartic acid, polyglutamic acid and polylysine, crosslinked products of these polymers, and derivatives chemically modified with a pendant group etc. The repeating unit in the main-chain fundamental skeleton of the polyamino acid derivative may be a copolymer composed of two or more amino acid structural units. The copolymer may be a block copolymer, a random copolymer or a graft copolymer.

The polyamino acid derivative is for example a polymer containing at least one member selected from the group consisting of polysuccinic imide, polyaspartic acid (salt), polyglutamic acid (salt), crosslinked polysuccinic imide, crosslinked poly as partic acid (salt) and cross linked polyglutamic acid (salt). The "acid (salt)" means an acid and/or a salt.

The starting material of the polyamino acid derivative includes, for example, aspartic acid, 19 kinds of essential amino acids excluding aspartic acid, as well as amino acids and amino acid derivatives such as L-ornithine, a series of α-amino acids, β-alanine, γ-aminobutyric acid, neutralamino acids, acid icamino acids, ω-esters of acidic amino acid, basic amino acids, N-substituted basic amino acids, and aspartic acid-L-phenyl alanine dimer (aspartame), and aminosulfonic acids such as L-cysteine. Isomers of these starting materials are not particularly limited. For example, α-amino acid may be L-, D-or DL-amino acid.

The structure of the main-chain moiety of the polyamino acid derivative may have a linear structure or a branched structure. In the main-chain fundamental skeleton of polyaspartic acid or crosslinked polyaspartic acid as one polyamino acid derivative, the amide bond in the main chain is an α- or β-bond. Usually, both α- and β-bonds occur in the polyaspartic acid structure, and in the present invention, the mode of binding is not particularly limited.

[Plastic having a melting point or glass transition temperature (Tg) of -10°C or more (component (B))]

The plastic having a melting point or glass transition temperature (Tg) of -10°C or more (component (B)) in the present invention refers to thermoplastic resin having a melting point or glass transition point (Tg) of preferably 25°C or more and a weight-average molecular weight (Mw) of 1000 or more and exhibiting the highest decomposition degree of 60% or more in a biodegradation test such as OECD301C, JIS K6950, JIS K6951, or JIS K6953, as well as a resin composition based thereon. The component (B) may have an aliphatic unsaturated bond.

Specific examples include polylactic acid, polyglycolic acid, lactic acid-glycolic acid copolymer, polyhydroxy butyrate, polybutylene succinate, polyvinyl alcohol, cellulose acetate, polyethylene succinate, polycaprolactone, polybutylene succinate adipate modification, polybutylene succinate carbonate modification, polybutyrene adipate/terephthalate, starch etc. As the biodegradable plastics in the present invention, lactic acid-based polyesters containing at least 5 mol% lactic acid unit as a polymer constituent are preferably used. Among the lactic acid-based polyesters, polylactic acid is particularly preferably used.

[Radial generating agent (C)]

The radical generating initiator (C) used in the present invention includes known benzoyl peroxides, for example peroxides such as p-chlorobenzoyl peroxide, lauroyl peroxide, acetyl peroxide, di-t-butyl peroxide, 2,5-dimethyl-2,5-bis(t-butylperoxy)hexane, 1, 1-t-butylperoxy-3,3,5-trimethyl cyclohexane, t-butyl peroxy pivalate, t-butylperoxy-2-ethyl hexanoate, t-butyl peroxy benzoate, bis(4-t-butyl cyclohexyl)peroxy dicarbonate, diisopropyl peroxy dicarbonate and t-butyl peroxy isopropyl carbonate, as well asazo compounds such asazo bis isobutyronitrile. These radical generating agents are used singly or as a mixture of two or more thereof. These radical generating agents are used in a ratio of 0.005-5 parts by weight, preferably 0.01-3 parts by weight, to 100 parts by weight of the aliphatic polyester or aliphatic polyamide having an aliphatic unsaturated bond. In the case of thermal crosslinking reaction, the temperature and time for the crosslinking reaction are selected suitably depending on the amount of the biodegradable plastics mixed, the type of the radical generating agent used, etc. A crosslinking aid can also be used in combination with the radical generating agent. The crosslinking aid can be exemplified by allyl compounds such as triallyl cyanurate and triallyl isocyanurate, methacrylate compounds such as ethylene glycol dimethacrylate and trimethylol propane trimethacrylate, and vinyl-containing compounds such as divinyl benzene.

[Resin composition (AA)]

The resin composition (AA) comprises an aliphatic polyester or aliphatic polyamide (component (A)), a plastic having a melting point or glass transition temperature (Tg) of -10°C or more (component (B)), and a radical generating agent (C), wherein the compounding ratio thereof, based on the total weight thereof, is 1 to 98.995%, preferably 20 to 80%, more preferably 40 to 60% by weight of the component (A), 98.995 to 1%, preferably 20 to 80%, more preferably 40 to 60% by weight of the component (B), and 0.005 to 5%, preferably 0.02 to 2%, more preferably 0.05 to 0.5% by weight of the radical generating agent (C).

[Method of producing the resin composition (AA)]

The resin composition (AA) of the present invention can be obtained by mixing the aliphatic polyester or aliphatic polyamide (component (A)), the plastic having a melting point or glass transition temperature (Tg) of -10°C or more (component (B)) and the radical generating agent (C), and can be made excellently compatible by a crosslinking reaction with the radical generating agent during or after mixing.

It is estimated that the crosslinking reaction occurs not only in the component (A) or (B) but also between the components (A) and (B). When the component (A) and/or the component (B) has an aliphatic unsaturated bond, the crosslinking reaction occurs mainly in the unsaturated bond contained in the structure of the component (A) or (B). Particularly when the biodegradable plastic is a lactic acid-based polyester, a crosslinking reaction involving withdrawal of methine hydrogen in the lactic acid unit easily occurs. When crosslinking occurs between the components (A) and (B), a copolymer having both the components (A) and (B) is formed, and this copolymer enhances the ability of both the components to be compatible with each other in the resin composition.

Generally, different kinds of polymers are hardly rendered compatible with each other, and are generally hardly uniformly mixed except for few exceptions. Accordingly, even if a merely flexible or liquid polymer (for example aliphatic polyester not having an aliphatic unsaturated bond) is mixed as a plasticizer with biodegradable plastics, no excellent plasticizing effect can be achieved, and thus the biodegradable plastics are rendered opaque and the plasticizer is separated and bled. On the other hand, the resin composition of the invention after crosslinking reaction between the aliphatic polyester having an aliphatic unsaturated bond and the biodegradable plastic gives a molded article with improvements in flexibility excellent particularly in transparency and free from bleeding of the plasticizer for the above reason.

The method of crosslinking the resin composition (AA) in the present invention is not particularly limited. The crosslinking reaction is caused mainly by heat, light, ultraviolet rays and electron rays. An initiator generating radicals and/or a sensitizer can be used to cause the crosslinking reaction easily. The initiator and sensitizer can be those known in the art. For crosslinking by heating, a method of granulation with a single- or twin-screw extruder is preferable, and a crosslinking aid can be used together with the radical generating agent.

In the crosslinking reaction with light such as ultraviolet rays, the sensitizer used is not particularly limited. Examples include known 4-phenoxydichloroacetophenone, 4-t-butyl-dichloroacetophenone, 4-t-butyl-trichloroacetophenone, diethoxyacetophenone, 2-hydroxy-2-methyl-1-phenylpropan-1-one, 1-(4-dodecylphenyl)-2-hydroxy-2-methylpropan-1-one, 1-hydroxycyclohexyl phenyl ketone, 2-methyl-1-[4-(methylthio)phenyl]-2-morpholinopropane-1, benzoin, benzoin methyl ether, benzoin ethyl ether, benzoin isopropyl ether, benzoin isobutyl ether, benzyl methyl ketal, benzophenone, benzoylbenzoic acid, methyl benzoyl benzoate, 4-phenyl benzophenone, hydroxybenzophenone, 4-benzoyl-4'-methyl diphenyl sulfide, 3,3'-dimethyl-4-methoxybenzophenone, thioxanthone, 2-chlorothioxanthone, 2-methyl thioxanthone, 2,4-dimethyl thioxanthone,isopropylthioxanthone,2,4-dichlorothioxanthone, 2,4-diisopropyl thioxanthone, 1-phenyl-1,2-propanedione-2-(o-ethoxycarbonyl) oxime, 2,4,6-trimethylbenzoyldiphenylphosphine oxide, methylphenyl glyoxylate, camphor quinone, dibenzosuberone, 2-ethylanthraquinone, 4',4"-diethylisophthalophenone, and 3,3',4,4'-tetra(t-butylperoxycarbonyl)benzophenone. These are used singly or as a mixture of two or more thereof. These sensitizers are used in a ratio of 0.005-5 parts by weight, preferably 0.01-3 parts by weight, to 100 parts by weight of the aliphatic polyester or aliphatic polyamide having an aliphatic unsaturated bond. Further, the above-mentioned radical generating initiator can also be used in combination. The crosslinking reaction with gamma rays does not particularly require the radial generating agent.

[Resin modifier comprising the resin composition (AA)]

When the resin composition (AA) is used as a resin modifier, the resin composition (AA) comprises the components (A) and (B) and the radical generating agent (C), wherein the amount of the component (A) is preferably 20 to 80% by weight, more preferably 40 to 60% by weight, the amount of the component (B) is preferably 20 to 80% by weight, more preferably 40 to 60% by weight, and the amount of the radical generating agent (C) is preferably 0.02 to 2% by weight, more preferably 0.05 to 0.5% by weight, based on the total weight.

[Resin composition (BB)]

The resin composition (BB) comprises 1 to 50%, preferably 10 to 45%, more preferably 20 to 40% by weight of the resin composition (AA) and 50 to 99%, preferably 55 to 90%, more preferably 60 to 80% by weight of the biodegradable resin (D). In this case, the resin composition (AA) is used as a resin modifier for the biodegradable resin (D), and upon addition to the biodegradable resin (D), improves flexibility, heat resistance and transparency. The biodegradable resin (D) is used in the same meaning as that of the component (B) and may be the same as or different from the component (B) constituting the resin composition (AA). The resin composition (BB) contains at least 50% by weight of polylactic acid, more preferably at least 60% by weight of polylactic acid.

When the resin composition (BB) contains at least 60% by weight of polylactic acid, the MFR (190°C, loading 2.16 kg) and swellratio(SR)oftheresincomposition(BB)satisfythefollowing relationship (relationship 3) when the MFR (190°C, loading 2.16 kg) is lower than 50 g/10 min.

$$SR \geq -0.6 \log (MFR) + 1.8 \qquad (3)$$

[Additives]

Depending on purposes (improvements for example in moldability, fabrication, degradation, tensile strength, heat resistance, shelf stability, weatherability etc.), various additives (plasticizers, antioxidants, UV absorbers, heat stabilizers, flame retardants, internal releasing agents, inorganic additives, antistatic agents, surface wetting improvers, combustion aids, pigments, lubricants, natural products etc.) can be added to a molded article comprising the resin composition of the present invention. For example, inorganic additives and lubricants (aliphatic carboxylic amides) can also be added for preventing blocking or improving sliding properties of film and sheet in T-die extrusion molding.

The inorganic additives include silica, calcium carbonate, talc, kaolin, kaolinite, titanium oxide, zinc oxide etc., among which silica and calcium carbonate are particularly preferable. These can be used singly or as a mixture of two or more thereof. The organic additives include starch, derivatives thereof, cellulose and derivatives thereof, pulp and derivatives thereof, paper and derivatives thereof, wheat flour, soybean fiber, bran, coconut shell, coffee grounds, protein etc. These can also be used singly or as a mixture of two or more thereof.

The method of mixing and kneading the lactic acid-based resin (component B), the aliphatic polyester having an aliphatic unsaturated bond (component A), a polymerization initiator and/or a sensitizer, and if necessary another modifier includes, for example, a method that involves uniform mixing with a high- or low-speed stirrer and subsequent melt-kneading with a single- or multi-screw extruder having sufficient kneading performance, and a method of mixing and kneading at the time of melting.

Mixing and kneading may be carried before molding of a molded article, or mixing and kneading may be carried out at the same time of molding. When mixing and kneading are carried out before molding, the resin composition is usually preferably in the form of pellets, bar, powder etc.

[Non-stretched molded article]

In a preferable embodiment, the resin composition used in the present invention comprises the components A and B crosslinked to increase melt tension.

Accordingly, a molded article requiring high melt tension at the time of molding can be preferably obtained. Examples of the molded article include an inflation film, a molded laminate product (paper lamination, aluminum lamination etc.), foam etc.

[Stretched molded article]

Regardless of whether the molded article obtained in the present invention is stretched or not, the molded article is stretched in 1.1- to 15-fold particularly in at least a monoaxial direction, whereby not only flexibility but also heat resistance and strength can be improved. The resin composition used in the present invention has improved compatibility between the component (A) (for example the aliphatic polyester having an aliphatic unsaturated bond) and the component (B) (for example the lactic acid-based resin) by crosslinking reaction, and is thus excellent in moldability in stretching orientation crystallization and prevents bleeding of the component (B) during and after stretching.

Stretching is carried out at a temperature of from the glass transition temperature (Tg) to the melting point of the lactic acid-based resin, preferably at a temperature of (Tg + 5°C) to (Tm - 20°C), more preferably at a temperature of (Tg + 10°C) to (Tm - 40°C). When the stretching temperature is lower than Tg or higher than Tm, stretching is hardly conducted.

Examples of the molded article stretched in at least a monoaxial direction include a film, sheet, tape yarn, (mono, multi) filament, nonwoven fabric, and stretched blow molded article, and any of these molded articles can be produced stably according to the present invention. The method of producing the molded article according to the present invention is not particularly limited and can use a known molding method.

[Physical properties of film and sheet]

The film and sheet obtained in the present invention have the following physical properties.

The haze of the film or sheet is 5% or less, preferably 3% or less, more preferably 2% or less. The tensile modulus of elasticity is 3000 MPa or less, preferably 2500 MPa or less, more preferably 2000 MPa or less. The breaking strength is 50 MPa or more, preferably 70 MPa or more, more preferably 80 MPa or more. The elongation at breakage is 100% or more, preferably 150% or more, more preferably 200% or more.

When the film and sheet obtained in the present invention after being left at 23°C in 43% RH atmosphere for 30 days is visually checked for bleeding of the plasticizer on the surface of the film, no plasticizer bleeding is observed. That is, no plasticizer bleeding occurs just after molding or with time, and flexibility and transparency do not change.

[Application Examples]

Molded articles produced by the invention, such as film, sheet, tape yarn, (mono, multi) filament, nonwoven fabric, stretched blow molded article, inflation film, laminate molded article and foam can be used preferably as various packaging films for food, electronics, medicine, chemicals, cosmetics etc. and as various materials used in agriculture, civil engineering and marine products industry, such as shopping bag, shrink film, garbage bag, compost bag, food/confectionary packaging film, food wrapping film, cosmetic/perfume wrapping film, diaper, sanitary napkin, wrapping film for pharmaceutical preparations, wrapping films for chemicals, wrapping film for application of chemicals for stiff neck and sprain, agricultural/horticultural film, wrapping film for agrochemicals, film for greenhouse, fertilizer bag, wrapping band, packaging film for magnetic tape cassettes such as video tape and audio tape, packaging film for flexible disk (FD), plate-making film, adhesive tape, waterproof sheet, sandbag, building film, weed controlling sheet, plant net, etc.

[Examples]

Hereinafter, the present invention is described in more detail by reference to experimental examples. The evaluation methods used in the Examples are as follows:

(1) Weight-average molecular weight (Mw)

The weight-average molecular weight of the aliphatic polyester having an aliphatic unsaturated bond was evaluated by gel permeation chromatography (GPC) with polystyrene as standard under the following conditions.

Unit: Shodex GPC system-11
Column: PL gel 5 $\mu$m MIXED-C (manufactured by Polymer Laboratory) Column temperature: 40°C
Solvent: chloroform
Concentration: 0.5% by weight
Injection volume: 20 $\mu$L
Flow rate: 1.0 mL/min.

(2) Glass transition point (Tg)

Determined in the range of -100 to 200°C by a differential scanning calorimeter (DSC-3100 manufactured by Mac Science). Increasing rate: 10°C/min.

(3) Film strength, modulus of elasticity, and elongation

Determined in accordance with JIS K7127.

(4) Filament strength and elongation

Determined in accordance with JIS L-1013.

(5) Haze

Determined in accordance with JIS K-6714 by using a haze meter manufactured by Tokyo Denshoku.

(6) Drop impact test

A 1000-ml container was charged with 800 ml water and then dropped from a height of 1.5 m to a floor of concrete under the condition of an atmospheric temperature of 20°C, and the number of times the container was dropped until it was broken was determined. The dropping was conducted 10 times at the maximum.

(7) Bleeding

A film of 10 cm in machine direction and 10 cm in width direction was left at 23°C in 40% RH atmosphere for 30 days, and bleeding of a plasticizer on the surface of the film was visually checked. Evaluation criteria are as follows:

○ : no bleeding. Δ: slightbleeding. ×: bleeding on the whole surface.

(8) MFR

190°C, loading 2.16 kg

(9) Swell ratio (SR)

(Strand diameter/D)$^2$ at the time of extrusion at 190°C through an orifice (length L = 3.00 mm, diameter D = 0.50 mm), barrel diameter B = 9.55 mm, speed 10.0 mm/min. was determined as SR.

(Formation of the resin composition (AA) and molding of a film using the same - a)

[Preparation Example a1]

Production of an aliphatic polyester (Mw 21000, polyester PA) having an aliphatic unsaturated bond

A separable flask equipped with a stirrer, a heater, a thermometer and a nitrogen line was charged with 151.7 g triethylene glycol, 141.8 g adipic acid and 3.5 g maleic acid. The compounding ratio of the respective components was 50 mol% triethylene glycol, 47 mol% adipic acid and 3 mol% maleic acid. 0.07 g titanium tetraisopropoxide and 0.1 g hydroquinone were added thereto and reacted at 150°C for 3 hours in a nitrogen stream, and while water was distilled away under reduced pressure at 2 kPa in the system, the mixture was further reacted at 150°C for 20 hours. After cooling, the weight-average molecular weight of the resulting aliphatic polyester was 21000. The glass transition point (Tg) was -45°C.

[Preparation Example a2]

Production of an aliphatic polyester (Mw 56000, polyester PB) having an aliphatic unsaturated bond

2.5% by weight of hexamethylene diisocyanate was added to polyester PA obtained in Preparation Example a1 and subjected to chain extension reaction at 100°C under reduced pressure conditions at 400 Pa for 2 hours. After cooling, the weight-average molecular weight of the resulting aliphatic polyester was 56000. The glass transition point (Tg) was -40°C.

[Preparation Example a3]

Production of a saturated aliphatic polyester (Mw19000, polyester PC)

A separable flask equipped with a stirrer, a heater, a thermometer and a nitrogen line was charged with 151.7 g triethylene glycol and 150.9 g adipic acid. The compounding ratio of the respective components was 50 mol% triethylene glycol and 50 mol% adipic acid. 0.07 g titanium tetraisopropoxide and 0.1 g hydroquinone were added thereto and reacted at 150°C for 3 hours in a nitrogen stream, and while water was distilled away under reduced pressure at 2 kPa in the system, the mixture was further reacted at 150°C for 20 hours. After cooling, the weight-average molecular weight of the resulting aliphatic polyester was 19000. The glass transition point (Tg) was -50°C.

[Preparation Example a4]

Production of an aliphatic polyester (Mw 21000, polyester PP) having an aliphatic unsaturated bond

A separable flask equipped with a stirrer, a heater, a thermometer and a nitrogen line was charged with 150.2 g triethylene glycol, 141.8 g adipic acid and 3.9 gitaconic acid. The compounding ratio of the respective components was 50 mol% triethylene glycol, 48.5 mol% adipic acid and 1.5 mol% itaconic acid. 0.02 g titanium tetraisopropoxide and 0.2 g hydroquinone were added thereto and reacted at 180°C for 3 hours in a nitrogen stream, and while water was distilled away under reduced pressure at 2 kPa in the system, the mixture was further reacted at 180°C for 20 hours. After cooling, the weight-average molecular weight of the resulting aliphatic polyester was 21000. The glass transition point (Tg) was -54°C.

[Examples a1 to a4]

The aliphatic polyester (polyester PA or polyester PB) having an aliphatic unsaturated bond obtained in Preparation Example a1 or a2 was added in an amount shown in Table a1 to polylacticacid manufactured by Mitsui Chemicals, Inc. (registered trademark LACEA, grade H-100, Mw 150000) and then kneaded at 200°C for 5 minutes with a twin-screw kneader (Laboplast Mill 80C100 manufactured by TOYOSEIKIKOGYO CO.,LTD). Kneading was terminated, and 2,5-dimethyl-2,5-bis(t-butylperoxy) hexane (trade name Perhexa 25B manufactured by Nippon Oil and Fats Co., Ltd.) was added as a radical-generating peroxide in an amount of 0.3 part by weight based on the total amount of the resin, and then the mixture was kneaded again at 200°C for 5 minutes. During kneading, an apparent increase in temperature and viscosity was observed, indicating that the crosslinking reaction proceeded. The resulting resin composition was pressed at 190°C, 12 MPa, with a heat pressing machine MP-WCH (manufactured by Toyo Seiki) to give a film of 200 μm in thickness.

Each film was transparent or slightly turbid, which was transparency with no practical problem. When the surface of the film was visually checked, no bleeding of polyester PA or PB was recognized. When the modulus of elasticity of the film was measured by a method prescribed under JIS K-7127, the modulus of elasticity was lower than that of the film composed exclusively of polylactic acid (Comparative Example a1), indicating that the film was evidently softened. The results are shown in Table a1.

[Table a1]

| | Polylactic acid (parts by weight) | Additive (parts by weight) | Peroxidase (parts by weight) | Evaluation of pressed film | | Tensile modulus of elasticity (MPa) |
|---|---|---|---|---|---|---|
| | | | | Turbidity*1 | Bleeding | |
| Example a1 | 90 | Polyester A    10 | 0.3 | None | O | 2500 |
| Example a2 | 70 | Polyester A    30 | 0.3 | slightly present | O | 1100 |
| Example a3 | 90 | Polyester B    10 | 0.3 | slightly present | O | 2700 |
| Example a4 | 70 | Polyester B    30 | 0.3 | slightly present | O | 1400 |
| Comparative Example a1 | 100 | None            0 | 0.3 | None | O | 3500 |
| Comparative Example a2 | 70 | Polyester C    30 | 0.3 | significant | x | 2700 |

*1:  Visual judgment

[Comparative Example a1]

Polylactic acid manufactured by Mitsui Chemicals, Inc. (registered trademark LACEA, grade H-100, Mw 150000) was kneaded at 200°C for 5 minutes with a twin-screw kneader without adding the aliphatic polyester having an aliphatic unsaturated bond. Kneading was terminated, and 2,5-dimethyl-2,5-bis(t-butylperoxy) hexane (trade name Perhexa 25B manufactured by Nippon Oil and Fats Co., Ltd.) was added as a radical-generating peroxide in an amount of 0.3 part by weight based on the total amount of the resin, and then the mixture was kneaded again at 200°C for 5 minutes. During kneading, an apparent increase in temperature and viscosity was not observed. The resulting polylactic acid was pressed at 200°C at 20 atmospheric pressure in a heat pressing machine to give a film of 200 μm in thickness. The film was a transparent and hard film having high modulus of elasticity. The results are shown in Table a1.

[Comparative Example a2]

The same procedure as in Example a2 was conducted except that the saturated aliphatic polyester (polyester PC) obtained in Preparation Example a3 was used in place of the aliphatic polyester having an aliphatic unsaturated bond. During kneading after addition of the peroxide, an apparent increase in temperature and viscosity was not observed. The resulting resin composition was pressed at 200°C at 20 atmospheric pressure in a heat pressing machine to give a film of 200 μm in thickness. The film was opaque. When the modulus of elasticity of the film was measured, measurements were significantly varied. The surface of the film was sticky, and bleeding of the added polyester was observed. The results are shown in Table a1.

[Examples a5 and a6]

The aliphatic polyester (polyester PP) having an aliphatic unsaturated bond obtained in Preparation Example a4 was added in an amount shown in Table a2 to polylactic acid manufactured by Mitsui Chemicals, Inc. (registered trademark LACEA, grade H-100, Mw 150000, grade H-400, Mw 200000) and then kneaded at 200°C for 5 minutes with a twin-screw kneader (Laboplast Mill 80C100 manufactured by TOYOSEIKIKOGYO CO.,LTD). Kneading was terminated, and 2,5-dimethyl-2,5-bis(t-butylperoxy) hexane (trade name Perhexa 25B manufactured by Nippon Oil and Fats Co., Ltd.) was added as a radical-generating peroxide in an amount of 0.3 part by weight based on the total amount of the resin, and then the mixture was kneaded again at 200°C for 5 minutes. During kneading, an apparent increase in temperature and viscosity was observed, indicating that the crosslinking reaction proceeded. The MFR and SR of the resulting resin composition are shown in Table a2.

[Comparative Examples a3 and a4]

A resin composition was obtained in the same manner as in Examples 5a and a6 except that the radical generating initiator was not used. The MFR and SR of the resulting resin composition are shown in Table a2.

[Table a2]

| | Polylacticacid (partsbyweight) | | Polyester PP (parts by weight) | Peroxide (parts by weight) | MFR | SR |
|---|---|---|---|---|---|---|
| | H-100 | H-400 | | | | |
| | | | | | (g/10 min.) | |
| Example a5 | 80 | 0 | 20 | 0.3 | 54.5 | 0.82 |
| Example a6 | 0 | 80 | 20 | 0.3 | 22.1 | 1.81 |
| Comparative Example a3 | 80 | 0 | 20 | 0 | 95.9 | 0.52 |
| Comparative Example a4 | 0 | 80 | 20 | 0 | 25.2 | 0.89 |

(Formation of the resin composition (AA) and molding of a film using the same)

[Preparation Example b1]

Production of an itaconic acid-containing lactic acid oligomer (Mw 2100, polyester PD)

A separable flask equipped with a stirrer, a heater, a thermometer and a nitrogen line was charged with 750.7 g of 90% L-lactic acid and 48.8 g itaconic acid. The compounding ratio of the respective components was 95.2 mol% L-lactic acid and 4.8 mol% itaconic acid. The mixture was reacted at 140°C for 2 hours in a nitrogen stream, and the pressure in the system was reduced gradually over 1 hour to 6.6 kPa, and while water was distilled away under reduced pressure at 6. 6 kPa for 2 hours and then at a pressure reduced to 1.3 kPa in the system, the mixture was reacted for 7 hours. After cooling,the weight-average molecular weight of the resulting it aconic acid-containing lactic acid oligomer (polyester PD) was 2100.

[Preparation Example b2] (Production of component (A))

Production of an aliphatic polyester (Mw 22000, polyester PE) having an aliphatic unsaturated bond

246.0 g polyester PD obtained in Preparation Example b1 was charged with 525.6 g triethylene glycol, 10.9 g ethylene glycol, 496.2 g adipic acid, 0.7 g hydroquinone and 0.07 g titanium tetraisopropoxide. The compounding ratio of the respective components was 31.0 mol% L-lactic acid, 1.6 mol% itaconic acid, 34.2 mol% triethylene glycol and 33.3 mol% adipic acid. The mixture was reacted at 160°C for 3 hours in a nitrogen stream, then feeding of nitrogen was terminated, and while water and ethylene glycol were distilled away at a pressure reduced to 1.3 kPa at 160°C for 8 hours, then at 180°C for 6 hours, at 190°C for 17 hours and at 200°C for 5 hours. After cooling, the resulting aliphatic polyester (polyester PE) had a weight-average molecular weight of 22000.

[Preparation Example b3]

Production of an itaconic acid-containing lactic acid oligomer (Mw 3500, polyester PF)

A separable flask equipped with a stirrer, a heater, a thermometer and a nitrogen line was charged with 750. 7 g of 90% L-lactic acid and 24.4 g itaconic acid. The compounding ratio of the respective components was 97.6 mol% L-lactic acid and 2.4 mol% itaconic acid. The mixture was reacted at 140°C for 2 hours in a nitrogen stream, and the pressure in the system was reduced gradually over 1 hour to 6.6 kPa, and while water was distilled away under reduced pressure at 6.6 kPa for 2 hours and then at a temperature increased to 160°C at a pressure reduced to 1.3 kPa in the system, the mixture was reacted for 12 hours. After cooling, the weight-average molecular weight of the resulting itaconic acid-containing lactic acid oligomer (polyester PF) was 3500.

[Preparation Example b4] (Production of component (A))

Production of an aliphatic polyester (Mw 22000, polyester PG) having an aliphatic unsaturated bond

198.8 g polyester PF obtained in Preparation Example b3 was charged with 225.3 g triethylene glycol, 4.7 g ethylene glycol, 212.6 g adipic acid, 0.3 g hydroquinone and 0.03 g titanium tetraisopropoxide. The compounding ratio of the respective components was 46.8 mol% L-lactic acid, 1.2 mol% itaconic acid, 26.4 mol% triethylene glycol and 25.6 mol% adipic acid. The mixture was reacted at 160°C for 4 hours in a nitrogen stream, and while water and ethylene glycol were distilled away at 200°C at a pressure reduced to 1.3 kPa in the system, the mixture was reacted for 18 hours. After cooling, the resulting aliphatic polyester (polyester PG) had a weight-average molecular weight of 22000.

[Examples b1 and b2] (Production of resin composition (AA))

The aliphatic polyester (polyester PE or polyester PG) having an aliphatic unsaturated bond obtained in Preparation Example b2 or Preparation Example b4 was added in an amount shown in Table b1 to polylactic acid manufactured by Mitsui Chemicals, Inc. (registered trademark LACEA, grade H-100, Mw 150000) and then kneaded at 200°C for 5 minutes with a twin-screw kneader (Laboplast Mill 80C100 manufactured by TOYOSEIKIKOGYO CO., LTD). Kneading was terminated, and 2,5-dimethyl-2,5-bis(t-butylperoxy) hexane (trade name Perhexa 25B manufactured by Nippon Oil and Fats Co., Ltd.) was added as a radical-generating peroxide in an amount of 0.3 part by weight based on the total amount of the resin, and then the mixture was kneaded again at 200°C for 5 minutes. During kneading, an apparent increase in temperature and viscosity was observed, indicating that the crosslinking reaction proceeded. The resulting resin composition was pressed at 200°C, 10 MPa, with a heat pressing machine MP-WCH (manufactured by TOYOSEIKIKOGYO CO.,LTD) to give a film of 150 µm in thickness.

Each film was transparent. When the surface of the film was visually checked, no bleeding of polyesters PE and PG was recognized. When the modulus of elasticity of the film was measured by a method prescribed under JIS K-7127, the modulus of elasticity was lower than that of the film composed exclusively of polylactic acid (Comparative Example a1), indicating that the film was evidently softened.

[Example b3] (Production of resin composition (AA))

50 parts by weight of the aliphatic polyester (polyester PE) having an aliphatic unsaturated bond obtained in Preparation Example b2 were added to 50 parts by weight of polylactic acid manufactured by Mitsui Chemicals, Inc. (registered trademark LACEA, grade H-100, Mw 150000) and then kneaded at 200°C for 5 minutes with a twin-screw kneader (Laboplast Mill 80C100 manufactured by TOYOSEIKIKOGYO CO.,LTD). Kneading was terminated, and 2,5-dimethyl-2,5-bis(t-butylperoxy) hexane (trade name Perhexa 25B manufactured by Nippon Oil and Fats Co., Ltd.) was added as a radical-generating peroxide in an amount of 0.3 part by weight based on the total amount of the resin, and then the mixture was kneaded again at 200°C for 5 minutes. During kneading, an apparent increase in temperature and viscosity was observed, indicating that the crosslinking reaction proceeded. [Example b4] (Production of resin composition (BB) and production of a film using the resin composition (BB))

40 parts by weight of the resin composition after crosslinking reaction (polyester PH) obtained in Example b3 were added to 60 parts by weight of polylactic acid manufactured by Mitsui Chemicals, Inc. (registered trademark LACEA, grade H-100, Mw 150000) and then kneaded at 200°C for 5 minutes with a twin-screw kneader (Laboplast Mill 80C100 manufactured by TOYOSEIKIKOGYO CO.,LTD). The resulting resin composition was pressed at 200°C, 10 MPa, with a heat pressing machine MP-WCH (manufactured by TOYOSEIKIKOGYO CO.,LTD) to give a film of 150 µm in thickness.

The film was transparent. When the surface of the film was visually checked, no bleeding of polyesters PE and PH was recognized. When the modulus of elasticity of the film was measured by a method prescribed under JIS K-7127, the modulus of elasticity was lower than that of the film composed exclusively of polylactic acid (Comparative Example a1), indicating that the film was evidently softened. (Haze, 0.7%; bleeding, ○; tensile modulus of elasticity, 2500 MPa).

[Comparative Example b1]

The aliphatic polyester (polyester PE) having an aliphatic unsaturated bond obtained in Preparation Example b2 was added in an amount shown in Table b1 to polylactic acid manufactured by Mitsui Chemicals, Inc. (registered trademark LACEA, grade H-100, Mw 150000) and then kneaded at 200°C for 5 minutes with a twin-screw kneader (Laboplast Mill 80C100 manufactured by TOYOSEIKIKOGYO CO.,LTD). The resulting resin composition was pressed at 200°C, 10 MPa, with a heat pressing machine MP-WCH (manufactured by TOYOSEIKIKOGYO CO.,LTD) to give a film of 150 µm in thickness.

Each film was slightly turbid. When the surface of the film was visually checked, polyester PE was slightly bled. When the modulus of elasticity of the film was measured by a method prescribed under JISK-7127, the modulus of elasticity was slightly lower than that of the film composed exclusively of polylactic acid (Comparative Example a1), indicating that the film was some what softened.

[Table b1]

| | Polylactic acid (parts by weight) | Polyester PE (parts by weight) | Polyester PG (parts by weight) | Peroxide (parts by weight) | Evaluation of film | | Tensile modulus of elasticity (MPa) |
|---|---|---|---|---|---|---|---|
| | | | | | Haze (%) | Bleeding | |
| Example b1 | 80 | 20 | 0 | 0.3 | 4 | O | 2511 |
| Example b2 | 80 | 0 | 20 | 0.3 | 0.5 | O | 2548 |
| Example b4 | 80 | 20 | 0 | 0.3 | 0.7 | O | 2500 |
| Comparative Example b1 | 80 | 20 | 0 | 0 | 14.5 | Δ | 3362 |

[Example c1-1] (Stretched film)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 90 : 10 : 0.3 by a Henschel mixer and then pelleted with a twin-screw kneader at a cylinder temperature set at 180 to 210°C. The pellets were used to form a film with an extruder equipped with a dryer to give a film of 200 μm in thickness. Subsequently, this film was stretched 2.5-fold in length and 2.5-fold in width in an oven set at a temperature of 65 to 75°C. The sample was excellent in both film manufacturability and stretchability to give a film stably. The physical properties of the resulting film are shown in Table c1.

[Example c1-2]

A stretched film was obtained by the same method as in Examplec 1-1 except that polylactic acid (LACEAH-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were used in a weight ratio of 70 : 30 : 0.3. The sample was excellent in both film manufacturability and stretchability to give a film stably. The physical properties of the resulting film are shown in Table c1.

[Example c1-3]

A stretched film was obtained by the same method as in Example c1-1 except that polylactic acid (LACEAH-100PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were used in a weight ratio of 90 : 10 : 0.3. The sample was excellent in both film manufacturability and stretchability to give a film stably. The physical properties of the resulting film are shown in Table c1.

[Example c1-4]

A stretched film was obtained by the same method as in Example c1-1 except that polylactic acid (LACEAH-100PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were used in a weight ratio of 70 : 30 : 0.3. The sample was excellent in both film manufacturability and stretchability to give a film stably. The physical properties of the resulting film are shown in Table c1.

[Example c1-5]

Polylactic acid (LACEA H-400, Mw 200000, manufactured by Mitsui Chemicals, Inc.), polyester PF obtained in Preparation Example b3, and 2,5-dimethyl-2,5-bis(t-butylperoxy) hexane (Perhexa 25B manufactured by Nippon Oil and Fats Co., Ltd.) were mixed in a weight ratio of 80 : 20 : 0.3 and pelleted at 200°C with a twin-screw kneader. The pellets were used to form a film of 500 μm in thickness with an extruder equipped with a nitrogen gas line (180 to 210°C). Subsequently, this film was stretched 3-fold in length and 3-fold in width with a batch twin-screw co-stretching machines et at a temperature of 70°C and heat-treated at a temperature of 120°C for 1 minute. The sample was excellent in both film manufacturability and stretchability to give a film stably. A transparent film with improvement inflexibility having a tensile modulus of elasticity of 2300 MPa, an elongation of 115%, a breaking strength of 102 MPa, and 0.7% haze was obtained. The evaluation of bleeding was ○.

[Comparative Example c1-1]

A stretched film was obtained by the same method as in Examplec 1-1 except that polylactic acid (LACEAH-100 PL, Mw 150000, manufactured by Mitsui Chemicals, Inc.), polyester PC, and 2,5-dimethyl-2,5-bis(t-butylperoxy) hexane (Perhexa 25B manufactured by Nippon Oil and Fats Co., Ltd.) were used in a weight ratio of 90 : 10 : 0.3. At the time of stretching, bleeding of polyester PC component on the surface of the film was recognized. The physical properties of the resulting film are shown in Table c1.

[Comparative Example c1-2]

A stretched film was obtained by the same method as in Example c1-1 except that polylactic acid (LACEAH-100 PL, Mw 150000, manufactured by Mitsui Chemicals, Inc.), polyester PC, and 2,5-dimethyl-2,5-bis(t-butylperoxy)

**EP 1 473 324 A1**

hexane (Perhexa 25B manufactured by Nippon Oil and Fats Co., Ltd.) were used in a weight ratio of 70 : 30 : 0. 3. At the time of stretching, bleeding of polyester PC component on the surface of the film was recognized. The physical properties of the resulting film are shown in Table c1.

[Comparative Example c1-3]

A stretched film composed exclusively of polylactic acid was obtained by pelleting, film-making and stretching in the same manner as in Example c1-5 except that polylactic acid (LACEA H-400, Mw 200000, manufactured by Mitsui Chemicals, Inc.) only was used. The resulting film was a transparent but hard film with a tensile modulus of elasticity of 3500 MPa, an elongation of 109%, a breaking strength of 120 MPa, and 1.0% haze.

**19**

[Table c1]

| | | Example | | | | Comparative Example | |
|---|---|---|---|---|---|---|---|
| | | c1-1 | c1-2 | c1-3 | c1-4 | c1-1 | c1-2 |
| Resin Composition (parts by weight) | Polylactic acid | 90 | 70 | 90 | 70 | 90 | 70 |
| | Aliphatic polyester | 10 (PA) | 30 (PB) | 10 (PA) | 30 (PB) | 10 (PC) | 30 (PC) |
| | Perhexa 25B | 0.3 | 0.3 | 0.3 | 0.3 | 0.3 | 0.3 |
| Evaluation | Tensile strength [MPa] | 56 | 55 | 45 | 40 | 50 | 35 |
| | Tensile modulus of elasticity [MPa] | 2500 | 1200 | 2600 | 1600 | 3000 | 3300 |
| | Elongation [%] | 20 | 250 | 100 | 180 | 10 | 80 |
| | Haze [%] | 2.0 | 7.0 | 2.5 | 20 | 2.5 | 60 |
| | Bleeding | O | O | O | O | × | × |

[Example c2-1] (Monofilament)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3 by a Henschel mixer and then pelleted with a twin-screw extruder under the condition of a cylinder temperature set at 180 to 210°C. The pellets were dried at 80°C for 10 hours and then spun at a temperature of 200 to 220°C with a 65 mm spinning machine (dice diameter 40 mm, number of nozzle openings 90) to give a non-stretched filament and then stretched while being passed through a first water bath at a temperature of 70 to 80°C and then through a second water bath at a temperature of 90 to 100°C (degree of stretching in total = 7.2-fold), followed by heat treatment through an atmosphere at 100 to 120°C. Spinning was stable, and troubles such as filament cutting did not occur. The physical properties of the resulting film are shown in Table c2.

[Example c2-2]

A monofilament was obtained by the same method as in Example c2-1 except that polylactic acid (LACEA H-100PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were used in a weight ratio of 70 : 30 : 0.3. Spinning was stable, and troubles such as filament cutting did not occur. The physical properties of the resulting filament are shown in Table c2.

[Comparative Example c2-1]

A monofilament was obtained by the same method as in Example c2-1 except that polylactic acid (LACEA H-100PL, Mw 150000, manufactured by Mitsui Chemicals, Inc.), polyester PC, and 2,5-dimethyl-2,5-bis(t-butylperoxy) hexane (Perhexa 25B manufactured by Nippon Oil and Fats Co., Ltd.) were used in a weight ratio of 70 : 30 : 0.3. At the time of spinning, filament cutting occurred, and monofilament could not be produced stably. Bleeding of polyester PC was recognized. The physical properties of the resulting filament are shown in Table c2.

[Table c2]

| | | Example | | Comparative Example |
|---|---|---|---|---|
| | | c2-1 | c2-2 | C2-1 |
| Resin Composition (parts by weight) | Polylactic acid | 70 | 70 | 70 |
| | Aliphatic polyester | 30(PA) | 30(PB) | 30(PC) |
| | Perhexa 25B | 0.3 | 0.3 | 0.3 |
| Tensile strength [g/d] | | 56 | 55 | 50 |
| Tensile modulus of elasticity [g/d] | | 250 | 1200 | 3000 |
| Elongation [%] | | 20 | 250 | 10 |
| Filament cutting | | No | No | Yes |
| Bleeding | | O | O | x |

[Comparative Example c3-1] (Multifilament)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3 by a Henschel mixer and then pelleted under the condition of a cylinder temperature set at 180 to 210°C in a twin-screw extruder. The pellets were dried at 80°C for 10 hours and then spun at a temperature of 230°C with a dice having 20 openings having a diameter of 0.2 mm with a dry spinning machine equipped with a dryer, to give a semi-stretched filament. The resulting filament was stretched at a temperature of 80 to 100°C and thermally fixed at a temperature of 120 to 140°C. Spinning was stable, and troubles such as filament cutting did not occur. The diameter of the resulting filament was 5d, and the strength was 4.0 g/d.

[Example c3-2]

A multifilament was obtained by the same method as in Example c2-1 except that polylactic acid (LACEA H-100PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were used in a weight ratio of 70 : 30 : 0.3. Spinning was stable, and troubles such as filament cutting did not occur. The diameter of the resulting filament was 5d, and the strength was 4.1 g/d.

[Comparative Example c3-1]

A multifilament was obtained by the same method as in Example b2-1 except that polylactic acid (LACEA H-100PL, Mw 150000, manufactured by Mitsui Chemicals, Inc.), polyester PC, and 2,5-dimethyl-2,5-bis(t-butylperoxy) hexane (Perhexa 25B manufactured by Nippon Oil and Fats Co., Ltd.) were used in a weight ratio of 70 : 30 : 0.3. At the time of spinning, filament cutting occurred, and multifilament could not be stably produced. The diameter of the resulting filament was 5d, and the strength was 3.8 g/d.

[Example c4-1] (Nonwoven fabric)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3 by a Henschel mixer and then pelleted with a twin-screw kneader at a cylinder temperature set at 180 to 210°C. The pellets were dried at 80°C for 10 hours, then melted at 210°C, melt-spun thorough a spinneret having 90 spinning openings having a diameter of 0.35 mm, taken off with an air sucker arranged 1300 mmbelow the spinneret and accumulated on a moving capturing surface to form a web thereon. The take-off speed was about 3500 m/min. Then, the resulting web was passed between a metal embossing roll heated at a temperature of 80 to 100°C and a smooth metal roll heated at the same temperature, and heat-fused to give a nonwoven fabric. The fineness of short fiber of the resulting nonwoven fabric was 2.5 d, and the basis weight of the nonwoven fabric was 30 g/m$^2$.

[Example c4-2]

A nonwoven fabric was obtained in the same manner as in Example c2-1 except that polylactic acid (LACEAH-100 PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3. The fineness of short fiber of the resulting nonwoven fabric was 2.5 d, and the basis weight of the nonwoven fabric was 30 g/m$^2$.

[Comparative Example c4-1]

A nonwoven fabric was obtained in the same manner as in Example c2-1 except that polylactic acid (LACEAH-100 PL, Mw 150000, manufactured by Mitsui Chemicals, Inc.), polyester PC, and 2,5-dimethyl-2,5-bis(t-butylperoxy) hexane (Perhexa 25B manufactured by Nippon Oil and Fats Co., Ltd.) were mixed in a weight ratio of 70 : 30 : 0. 3. At the time of spinning, filament cutting occurred, and spinning could not be conducted well under the condition of a take-off speed of about 3500 m/min. Then, the take-off speed was reduced to about 2600 m/min., and as a result, spinning could be achieved without filament cutting, and a nonwoven fabric having a short-fiber fineness of 3.0 d and a basis weight of 30 g/m$^2$ was obtained.

[Example c5-1] (Tape)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3 by a Henschel mixer and then pelleted with a twin-screw kneader at a cylinder temperature set at 180 to 210°C. The pellets were dried at 80°C for 10 hours and then formed into a film of 100 μm in thickness with a 90 mm extruder of 1200 m in dice width and 0.8 mm in lip gap at a temperature of 150 to 210°C, equipped with a dryer. Then, the film was slitted into a tape of 6 mm in width, then stretched 5-fold at a temperature of 65 to 80°C on a hot plate, and thermally fixed on a hot plate at 100 to 120°C. At the time of stretching, no bleeding of the polyester PA component on the surface of the tape was recognized. The resulting tape had a width of 3.5 mm, a thickness of 30 μm and a strength of 5.5 g/d.

[Example c5-2]

A tape was obtained in the same manner as in Example c2-1 except that polylactic acid (LACEAH-100 PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3. At the time of stretching, no bleeding of the polyester PB component on the surface of the tape was recognized. The resulting tape had a width of 3.5 mm, a thickness of 30 μm and a strength of 5.4 g/d.

[Comparative Example c5-1]

A tape was obtained in the same manner as in Example c2-1 except that polylactic acid (LACEAH-100PL, Mw 150000, manufactured by Mitsui Chemicals, Inc.), polyester PC, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3. At the time of stretching, bleeding of the polyester PC component on the surface of the tape was recognized. The resulting tape had a width of 3.5 mm, a thickness of 30 μm and a strength of 5.0 g/d.

[Example c6-1] (Stretching blow molding)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3 by a Henschel mixer and then pelleted with a twin-screw kneader at a cylinder temperature set at 180 to 210°C. The pellets were dried at 80°C for 10 hours, then melted at a cylinder temperature of 140 to 250°C and injection-molded into a mold set at 0 to 50°C in an injection stretching blowing molding machine, to give 40 g cold parison. The resulting parison was softened by heating at 100°C and transferred in to a bottle-shaped mold and blow-stretched 3.5-fold in length and 3-fold in width with blown pressurized air at 1 MPa, to give a cylindrical bottle having an aperture of 75 mm, a height of 100 mm and an internal volume of 1000ml. The thickness of the wall was 0.2 mm. This blown bottle was charged with 800 ml water and dropped 10 times from a height of 1.5 m to a floor of concrete under the condition of an ambient temperature of 20°C, but the bottle was not broken.

[Example c6-2]

A bottle was obtained in the same manner as in Example c2-1 except that polylactic acid (LACEA H-100PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3. The thickness of the wall was 0.2 mm. This blown bottle was charged with 800 ml water and dropped 10 times from a height of 1.5 m to a floor of concrete under the condition of an ambient temperature of 20°C, but the bottle was not broken.

[Comparative Example c6-1]

A bottle was obtained in the same manner as in Example c2-1 except that polylactic acid (LACEA H-100PL, Mw 150000, manufactured by Mitsui Chemicals, Inc.), polyester PC, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3. The thickness of the wall was 0.2 mm. This blown bottle was charged with 800 ml water and dropped 10 times from a height of 1.5 m to a floor of concrete under the condition of an ambient temperature of 20°C, and the bottle was not broken in the 3rd dropping.

[Example c7-1] (Molding of a paper laminate)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3 by a Henschel mixer and then pelleted with a twin-screw kneader at a cylinder temperature set at 180 to 210°C. The pellets were dried at 80°C for 10 hours, then kneaded and melted at 235°C with an extruder equipped with a dryer and fit with a T die of 1300 mm in width and 0.8 mm in lip width, and extruded onto a craft paper (basis weight of 75 g/m$^2$) at a take-off speed of 120m/min. The filmmanufacturability was excellent without film cutting. The thickness of the resin layer of the resulting paper laminate was 20±2 µm and the layer was excellent in thickness accuracy.

[Example c7-2]

A paper laminate was obtained in the same manner as in Example c7-1 except that polylactic acid (LACEAH-100 PL, Mw 150000, manufactured by Mitsui Chemicals, Inc.), polyester PB, and 2,5-dimethyl-2,5-bis(t-butylperoxy) hexane (Perhexa 25B, manufactured by Nippon Oil and Fats Co., Ltd.) were used in the weight ratio of 70 : 30 : 0.3. The film manufacturability was excellent without film cutting. The thickness of the resin layer of the resulting paper laminate was 20±2 µm and the layer was excellent in thickness accuracy.

[Comparative Example c7-1]

A paper laminate was obtained in the same manner as in Example c7-1 except that polylactic acid (LACEAH-100PL, Mw 150000, manufactured by Mitsui Chemicals, Inc.), polyester PC, and 2,5-dimethyl-2,5-bis(t-butylperoxy) hexane (Perhexa 25B, manufactured by Nippon Oil and Fats Co., Ltd.) were used in the weight ratio of 70:30:0.3. With respect to film manufacturability, neck-in occurred, film cutting occurred in some cases, and a paper laminate could not be stably formed. The thickness of the resin layer of the resulting paper laminate was 23±7 µm and the layer was poor in thickness accuracy.

[Example c8-1] (Inflation molding)

Polylactic acid (LACEA H-100PL, Mw 150000, manufactured by Mitsui Chemicals, Inc.), polyester PA, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3 by a Henschel mixer, then molded at a resin extrusion temperature of 160 to 170°C in an expansion ratio of about 2.4 in a 40 mm inflation molding machine (dice diameter 40 mm) to form an inflation film having a lay-flat width of 150 mm and a thickness of 30 µm, and taken off. During and after molding, there was no bleeding of the polyester PA, and there was no blocking between the films.

[Example c8-2]

An inflation film was obtained in the same manner as in Example c7-1 except that polylactic acid (LACEAH-100 PL, Mw 150000, manufactured by Mitsui Chemicals, Inc.), polyester PB, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3. The film manufacturability was excellent without film cutting. During and after molding, there was no bleeding of the polyester PB, and there was no blocking between the films.

[Comparative Example c8-1]

An inflation film was obtained in the same manner as in Example c7-1 except that polylactic acid (LACEAH-100PL, Mw 150000, manufactured by Mitsui Chemicals, Inc.), polyester PC, and 2,5-dimethyl-2,5-bis(t-butylperoxy) hexane (Perhexa 25B manufactured by Nippon Oil and Fats Co., Ltd.) were mixed in a weight ratio of 70 : 30 : 0.3. During and after molding, bleeding of the polyester PC occurred, and blocking between the films was recognized.

Industrial Applicability

According to the present invention, there is provided a resin composition suitable as a starting material of biodegradable material maintaining transparency, free of bleeding of a plasticizer and endowed with flexibility.
The molded article of the invention is a molded article excellent in flexibility, mechanical strength, safety and decomposition and free of bleeding of a plasticizing component and can thus be preferably used as a material widely in various packaging films for food, electronics, medicine, chemicals, cosmetics etc. and in various materials used in agriculture, civil engineering, buildings, marine products industry, and compost materials. Even if the molded article is disposed of after use, it is not accumulated as industrial waste or domestic waste.

**Claims**

1. A resin composition (AA) comprising an aliphatic polyester or aliphatic polyamide (component (A)), a plastic having a melting point or glass transition temperature (Tg) of -10°C or more (component (B)) and a radical generating agent (C),
   wherein the compounding ratio of the component (A), the component (B) and the radical generating agent (C), based on the total weight thereof, is:

   1 to 98.995% by weight of the component (A),
   98.995 to 1% by weight of the component (B), and
   0.005 to 5% by weight of the radical generating agent (C), and

   an aliphatic unsaturated polybasic acid (a) is contained in the polymer constituent of the component (A) and/or the component (B).

2. The resin composition (AA) according to claim 1, wherein the component (A) is an aliphatic polyester containing in the polymer constituent of the component an aliphatic unsaturated polybasic acid (a), an aliphatic polyvalent alcohol (b) and an aliphatic saturated polybasic acid (c).

3. The resin composition (AA) according to claim 1 or 2, wherein the component (A) is an aliphatic polyester containing in the polymer constituent of the component 0.1 to 10 mol% aliphatic unsaturated polybasic acid (a), 10 to 50 mol% aliphatic polyvalent alcohol (b), 0 to 49.9 mol% aliphatic saturated polybasic acid (c) and 0 to 80 mol% aliphatic hydroxycarboxylic acid (d).

4. The resin composition (AA) according to claims 1 to 3, wherein the component (B) is at least one member selected from the group consisting of polylactic acid, polyglycolic acid, lactic acid-glycolic acid copolymer, polyhydroxybutyrate, polyhydroxyalkanoate, polybutylenesuccinate, polyvinylalcohol, cellulose acetate, polyethylene succinate, polycaprolactone, polybutylene succinate adipate modification, polybutylene succinate carbonate modification, polybutyrene adipate/terephthalate, and copolymers and mixtures thereof.

5. A resin modifier comprising the resin composition (AA) described in claims 1 to 4.

6. A resin composition (BB) comprising 1 to 50% by weight of the resin composition (AA) described in claims 1 to 4 and 50 to 99% by weight of a biodegradable resin (D).

7. The resin composition (AA) or (BB) according to claims 1 to 4 or claim 6, which comprises a component subj ected to crosslinking reaction.

8. A molded article comprising the resin composition (AA) or (BB) described in claims 1 to 4 or claim 6.

9. A film having a haze of 2% or less, a tensile modulus of elasticity of 2600 MPa or less, a breaking strength of 70 MPa or more and an elongation at breakage of 100% or more, comprising a resin composition containing at least 50% by weight of polylactic acid.

<table>
<tr><td colspan="2"><b>INTERNATIONAL SEARCH REPORT</b></td><td colspan="2">International application No.<br>PCT/JP03/00973</td></tr>
</table>

| A. CLASSIFICATION OF SUBJECT MATTER |
|---|
| Int.Cl⁷ C08L67/00, C08J5/00, C08L77/00, C08L101/16 |

According to International Patent Classification (IPC) or to both national classification and IPC

| B. FIELDS SEARCHED |
|---|

Minimum documentation searched (classification system followed by classification symbols)
Int.Cl⁷ C08L67/00-67/04, C08L77/00-77/12

Documentation searched other than minimum documentation to the extent that such documents are included in the fields searched
Jitsuyo Shinan Koho          1926–2003    Toroku Jitsuyo Shinan Koho    1994–2003
Kokai Jitsuyo Shinan Koho    1971–2003    Jitsuyo Shinan Toroku Koho    1996–2003

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2001-64379 A (Shimadzu Corp.),<br>13 March, 2001 (13.03.01),<br>Column 1, lines 2 to 5<br>(Family: none) | 1-9 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>25 February, 2003 (25.02.03) | Date of mailing of the international search report<br>11 March, 2003 (11.03.03) |
|---|---|
| Name and mailing address of the ISA/<br>Japanese Patent Office | Authorized officer |
| Facsimile No. | Telephone No. |

Form PCT/ISA/210 (second sheet) (July 1998)